Europäisches Patentamt

European Patent Office

Office européen des brevets

(19)

(11) Numéro de publication : **0 152 364 B1**

(12) **FASCICULE DE BREVET EUROPÉEN**

(45) Date de publication du fascicule du brevet : **11.10.89**

(51) Int. Cl.⁴ : **A 01 F 25/20**

(21) Numéro de dépôt : **85440005.8**

(22) Date de dépôt : **06.02.85**

(54) Machine pour le prélèvement de blocs de fourrage dans un silo, avec des moyens d'entraînement perfectionnés.

(30) Priorité : 07.02.84 FR 8401980

(43) Date de publication de la demande :
21.08.85 Bulletin 85/34

(45) Mention de la délivrance du brevet :
11.10.89 Bulletin 89/41

(84) Etats contractants désignés :
AT BE DE GB IT NL SE

(56) Documents cités :
EP--A-- 0 071 555
DE--A-- 3 218 422

(73) Titulaire : KUHN S.A.
4, Impasse des Fabriques
F-67700 Saverne (FR)

(72) Inventeur : Kobel, Richard
46, Route de Wintershouse
F-67590 Schweighouse S/Moder (FR)
Inventeur : Wattron, Bernard
159, rue Principale Schwenheim
F-67440 Marmoutier (FR)

(74) Mandataire : Andres, Jean-Claude
KUHN S.A. 4, Impasse des Fabriques
F-67700 Saverne (FR)

## Description

La présente invention concerne les machines pour le prélèvement de blocs de fourrage dans un silo horizontal, comportant un châssis qui est pourvu à sa partie inférieure de dents s'étendant dans un plan sensiblement horizontal et, à sa partie supérieure d'un bras qui s'étend à une certaine distance au-dessus des dents et porte à son extrémité la plus éloignée du châssis un dispositif de coupe, ledit bras étant articulé sur un support par l'intermédiaire d'un axe de pivotement logé dans des paliers, lequel support est situé entre le bras et le châssis et est lui-même guidé au moyen de paliers sur un axe d'articulation du châssis, autour duquel il peut être déplacé en rotation au moyen d'organes d'entraînement, ledit axe d'articulation comportant une roue dentée engrenant avec une roue dentée intermédiaire qui est montée sur un axe logé dans des paliers du support et qui engrène avec une roue dentée reliée au bras de manière à faire tourner ce bras sur son axe de pivotement avec le support dans le sens opposé au sens de rotation dudit support autour de son axe d'articulation avec le châssis.

Sur une machine de ce genre, connue dans la demande de brevet EP-A-71 555, les paliers de guidage de l'axe de pivotement du bras qui porte le dispositif de coupe, les paliers de l'axe portant la roue dentée intermédiaire et les paliers de l'axe d'articulation dudit support sur le châssis de la machine se situent d'un seul côté par rapport aux roues dentées prévues sur ces axes en vue de faire tourner ledit bras dans le sens opposé à celui du support durant le prélèvement. En raison de cette disposition unilatérale des paliers par rapport aux roues dentées, les axes qui portent ces dernières se déforment ou cassent rapidement lorsque la puissance à transmettre par ces roues pour déplacer le bras porteur du dispositif de coupe devient importante.

De ce fait, cette machine ne peut pas être utilisée ni pour couper du fourrage dans les silos fortement tassés ni pour prélever des blocs de gros volume.

La présente invention a notamment pour but de remédier à l'inconvénient précité et, d'une manière générale, de renforcer les moyens d'entraînement du bras portant le dispositif de coupe.

A cet effet, une importante caractéristique de l'invention consiste en ce que les paliers de guidage de chaque axe portant une des roues dentées sont placés de part et d'autre de la roue dentée correspondante de telle sorte que, par rapport auxdites roues dentées, un des paliers se situe du côté du bras portant le dispositif de coupe et un autre du côté du châssis de la machine.

Ce guidage assure une bonne stabilité aux axes portant les roues dentées. Cela améliore la tenue de ces roues dentées et de leurs axes et permet de transmettre plus de puissance pour le découpage dans les silos fortement tassés ainsi que le prélèvement de blocs de gros volume.

D'autres caractéristiques et avantages de l'invention ressortiront de la description ci-après, avec référence aux dessins annexés qui représentent, à titre d'exemple non limitatif, une forme de réalisation de l'invention.

Dans ces dessins :

La figure 1 représente une vue de côté, avec une coupe partielle, d'une machine selon l'invention,

La figure 2 représente une vue de dessus de cette machine,

La figure 3 représente, à plus grande échelle, une coupe suivant le plan brisé III-III de la figure 2,

La figure 4 représente, à plus grande échelle, une coupe suivant le plan IV-IV de la figure 2.

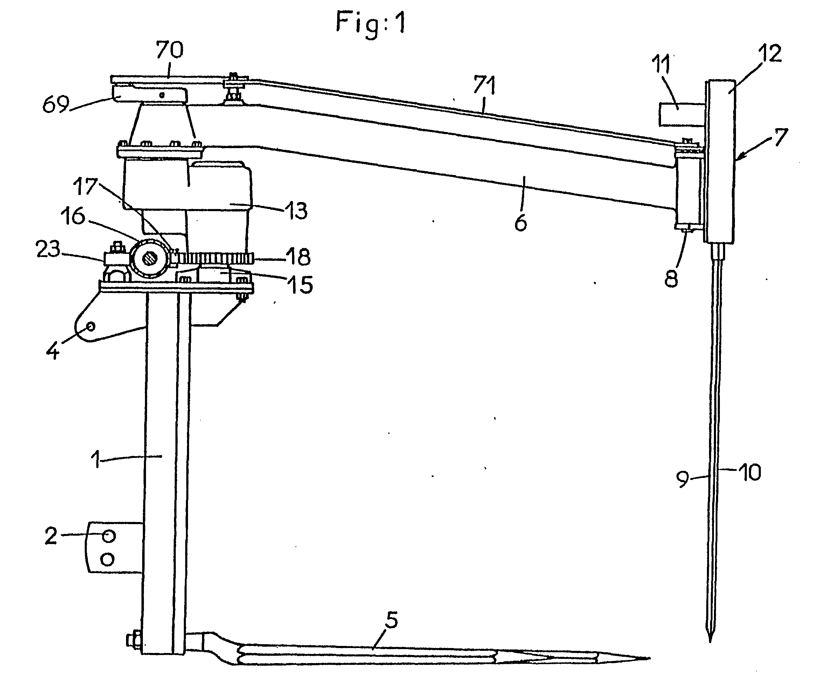

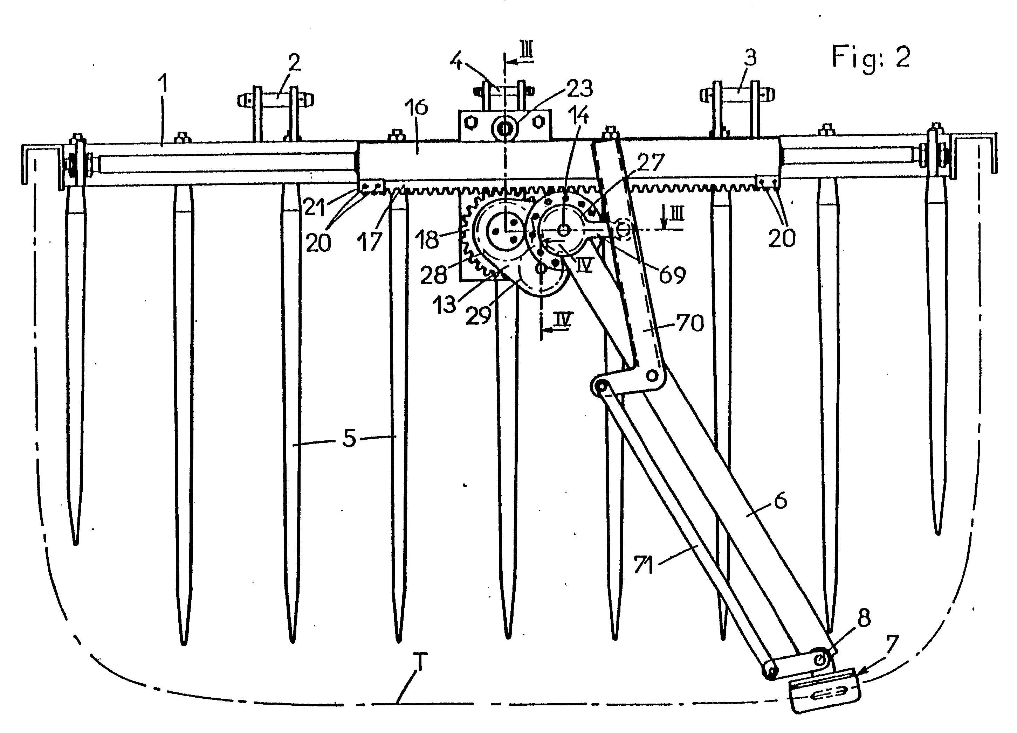

Telle qu'elle est représentée sur les figures 1 et 2, la machine selon l'invention comprend notamment un châssis (1) formant un cadre rigide. Ce châssis (1) comporte trois points d'accouplement pour l'attelage à un tracteur d'entraînement non représenté. Ces points d'accouplement sont constitués par deux tourillons inférieurs (2 et 3) et une chape supérieure (4). Ledit châssis est également pourvu à sa partie inférieure de dents (5) qui s'étendent dans un plan sensiblement horizontal. A sa partie supérieure est prévu un bras (6) qui porte à son extrémité extérieure un dispositif de coupe (7). Celui-ci est articulé sur ledit bras au moyen d'un axe sensiblement vertical (8). Il se compose essentiellement de deux couteaux parallèles (9 et 10) qui sont entraînés en un mouvement alternatif au moyen d'un moteur hydraulique (11) et d'excentriques logés dans un boîtier (12). Ces couteaux (9 et 10) s'étendent verticalement pratiquement jusqu'aux dents (5) prévues à la partie inférieure du châssis (1). Ces deux couteaux (9 et 10) pourraient être remplacés par un seul couteau.

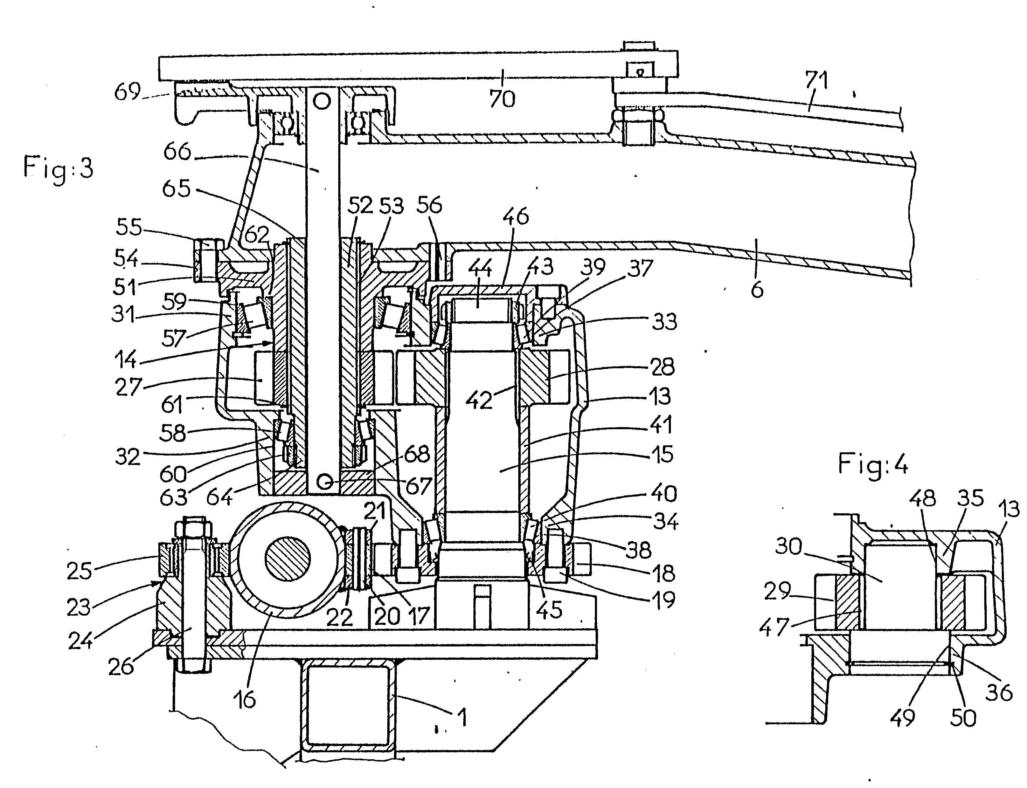

Le bras (6) portant le dispositif de coupe (7) est articulé sur un support (13) au moyen d'un axe sensiblement vertical (14). Ce support (13) est lui-même articulé sur un axe sensiblement vertical (15) qui est solidaire du châssis (1) de la machine. Ledit support et le bras (6) peuvent être déplacés autour de cet axe d'articulation (15) au moyen d'un vérin hydraulique à double tige (16) qui est fixé sur le châssis (1). En vue de ce déplacement, le corps du vérin (16) est muni d'une crémaillère (17) qui engrène avec une roue ou couronne dentée (18) fixée à la partie inférieure du support (13) au moyen de vis (19) (figure 3). Cette crémaillère (17) peut ainsi être déplacée au moyen du vérin hydraulique (16) dont la commande s'effectue à partir du siège du tracteur. Elle entraîne alors la couronne dentée (18), le support (13) et, par l'intermédiaire de ce dernier, le bras porteur (6) du dispositif de coupe (7) autour de l'axe d'articulation (15) solidaire du châssis (1). La fixation de la crémaillère (17) sur le corps du vérin (16) est réalisée au moyen de goupilles (20). Celles-ci lient la crémaillère à des pattes (21 et 22) qui sont soudées sur ledit corps du vérin (16). Ce vérin (16) est guidé en translation au moyen d'une butée (23). Cette butée est constituée par un axe (24) portant un galet (25), ledit axe étant fixé sur le châssis (1) au moyen d'un boulon (26).

Dans le support (13) sont par ailleurs prévus des moyens pour faire tourner le bras porteur (6) du dispositif de coupe (7) autour de son axe d'articulation (14) avec le support (13), en même temps qu'il tourne avec ce dernier. La longueur du bras (6) est supérieure à celle de ce support.

Tel que cela ressort de la figure 2, ces moyens sont constitués par trois roues dentées (27, 28 et 29). La roue (27) est solidaire du bras porteur (6). La roue (28) est fixée rigidement sur l'axe d'articulation (15) qui est solidaire du châssis (1). Enfin, la roue (29) est montée libre en rotation sur un axe (30) solidaire du support (13). Cette roue intermédiaire (29) assure la liaison entre les deux roues (27 et 28) précitées. Elle pourrait être remplacée par une chaîne d'entraînement (exemple non représenté) passant sur les roues (27 et 28). En raison de la disposition de ces roues dentées (27, 28 et 29), la rotation du bras porteur (6) autour de son axe (14) s'effectue dans le sens opposé au sens de rotation du support (13) autour de son axe d'articulation (15) avec le châssis (1). En sus, ces deux mouvements de rotation sont synchronisés de telle sorte que la vitesse de rotation du bras porteur (6) autour de son axe d'articulation (14) est égale à quatre tiers de la vitesse de rotation du support (13) autour de son axe d'articulation (15) avec le châssis (1). Grâce à ces mouvements synchronisés le support (13) et le bras porteur (6) déplacent le dispositif de coupe (7) suivant une trajectoire (T) en forme de U, en vue du découpage de blocs de forme parallélépipédique.

Conformément à une importante caractéristique de l'invention, chacun des axes (14, 15 et 30) sur lesquels sont positionnées les roues dentées (27, 28 et 29) est guidé dans deux paliers (31 et 32, 33 et 34, 35 et 36) placés de part et d'autre de la roue dentée correspondante, un de ces paliers se situant du côté du bras (6) portant le dispositif de coupe (7) et l'autre du côté du châssis (1) de la machine (figures 3 et 4). Contrairement à un montage en porte à faux, le guidage selon l'invention permet de transmettre une grande puissance par ces roues dentées (27, 28 et 29) disposées sur les axes (14, 15 et 30). Ces derniers résistent ainsi parfaitement aux importants efforts s'exerçant sur eux par suite du déplacement du bras porteur (6) du dispositif de coupe (7). De plus, ces efforts se répercutent bien sur le châssis (1) qui est conçu de manière à pouvoir y résister facilement.

Selon une autre caractéristique de l'invention, les roues dentées (27, 28 et 29) sont logées à l'intérieur du support (13). Celui-ci forme un carter pratiquement étanche qui assure leur protection. Les paliers de guidage (31 à 36) des trois axes (14, 15 et 30) sont prévus dans la paroi supérieure et la paroi inférieure de ce support (13). Chaque palier de guidage (33 et 34) du support (13) sur l'axe de pivotement (15) solidaire du châssis (1), présente un alésage (37 et 38). Dans chacun de ces alésages (37 et 38) est logé un roulement à rouleaux coniques (39 et 40) positionné par ailleurs sur l'axe de pivotement (15). Entre ces deux roulements (39 et 40) sont prévues une douille de positionnement (41) et la roue dentée (28) qui est solidarisée de l'axe (15) à l'aide de cannelures (42). Le maintien en place de ces différentes pièces sur l'axe de pivotement (15) est assuré par un écrou (43) se vissant sur l'extrémité filetée (44) dudit axe. A la partie inférieure de l'axe de pivotement (15) est prévu un joint (45) pour assurer l'étanchéité du support (13), tandis que l'alésage (37) du palier supérieur (33) est obturé au moyen d'un couvercle (46).

Comme cela ressort de la figure 4, la roue dentée intermédiaire (29) est montée libre en rotation sur son axe (30) au moyen d'aiguilles jointives (47). Chaque palier de guidage (35 et 36) de cet axe (30) présente un alésage (48 et 49). Ledit axe est logé dans ces alésages (48 et 49) et y est bloqué au moyen d'un circlips (50).

L'axe de pivotement (14) du bras porteur (6) sur le support (13) est solidaire dudit bras porteur. Cet axe (14) est réalisé en deux parties (51 et 52) pour en faciliter l'usinage. Ces parties sont liées entre elles au moyen de cannelures (53). La partie extérieure (51) comporte un flasque (54) pour la fixation sur le bras porteur (6) à l'aide de vis (55) et de goupilles (56). Cet axe de pivotement (14) est guidé extérieurement au moyen de roulements à rouleaux coniques (57 et 58) dans des alésages (59 et 60) des paliers (31 et 32). La roue dentée (27) se situe entre ces deux roulements (57 et 58) et est solidarisée de la partie intérieure (52), de l'axe (14) au moyen des cannelures (53) précitées et d'un circlips (61). Cet axe de pivotement (14) est maintenu en place au moyen d'un épaulement (62) s'appuyant contre le roulement supérieur (57) et un écrou (63) se vissant sur l'extrémité filetée (64) et s'appuyant contre le roulement inférieur (58). L'alésage (59) du palier (31) est fermé au moyen du flasque (54) de la partie extérieure (51) de l'axe de pivotement (14).

Ledit axe de pivotement comporte en sus un alésage intérieur (65). Celui-ci est traversé par une tige (66) fixée sur le support (13) au moyen d'une goupille (67). Cette goupille (67) sert en même temps au montage d'une rondelle (68) qui permet d'obturer l'alésage (60) du palier inférieur (32) prévu dans le support (13). La tige (66) traverse l'axe de pivotement (14) et le bras porteur (6). Son extrémité supérieure est reliée à des tringles (69, 70 et 71) qui orientent le dispositif de coupe (7) autour de son axe d'articulation (8), de sorte que les couteaux (9 et 10) soient toujours dirigés dans la direction de déplacement.

Pour l'extraction d'un bloc de fourrage, le dispositif conforme à l'invention est accouplé à un tracteur. A l'aide de ce dernier les dents (5) de la partie inférieure du châssis (1) sont enfoncées dans le fourrage. Les deux couteaux (9 et 10) sont alors entraînés au moyen du moteur hydraulique (11) et déplacés à l'aide du bras porteur (6) suivant la trajectoire (T), en vue du découpage d'un bloc ayant une forme sensiblement parallélépipédique.

Le bloc découpé peut alors être retiré du silo et transporté jusqu'au lieu d'affouragement où il peut être distribué immédiatement ou être entre-posé tel quel pendant plusieurs jours. La machine selon l'invention peut également être équipée d'un dispositif de déchiquetage et de distribution.

Il est bien évident qu'on pourra apporter à l'exemple de réalisation décrit ci-dessus divers perfectionnements, modifications ou additions ou remplacer certains éléments par des éléments équivalents sans pour autant sortir du cadre de la présente invention.

## Revendications

1. Machine pour le prélèvement de blocs de fourrage dans un silo horizontal, comportant un châssis (1) qui est pourvu à sa partie inférieure de dents (5) s'étendant dans un plan sensiblement horizontal et, à sa partie supérieure d'un bras (6) qui s'étend à une certaine distance au-dessus des dents (5) et porte à son extrémité la plus éloignée du châssis (1) un dispositif de coupe (7), ledit bras (6) étant articulé sur un support (13) par l'intermédiaire d'un axe de pivotement (14) logé dans des paliers (31, 32), lequel support (13) est situé entre le bras (6) et le châssis (1) et est lui-même guidé au moyen de paliers (33, 34) sur un axe d'articulation (15) du châssis (1) autour duquel il peut être déplacé en rotation au moyen d'organes d'entraînement (16, 17, 18), ledit axe d'articulation (15) comportant une roue dentée (28) engrènant avec une roue dentée intermédiaire (29) qui est montée sur un axe (30) logé dans des paliers (35, 36) du support (13) et qui engrène avec une roue dentée (27) reliée au bras (6) de manière à faire tourner ce bras (6) sur son axe de pivotement (14) avec le support (13) dans le sens opposé au sens de rotation dudit support (13) autour de son axe d'articulation (15) avec le châssis (1), caractérisée par le fait que les paliers de guidage (31 et 32, 33 et 34, 35 et 36) de chaque axe (14, 15 et 30) sont placés de part et d'autre de la roue dentée (27, 28 et 29) correspondante de telle sorte que, par rapport auxdites roues dentées, un des paliers se situe du côté du bras (6) portant le dispositif de coupe (7) et un autre du côté du châssis (1) de la machine.

2. Machine selon la revendication 1, caractérisée par le fait que les roues dentées (27, 28 et 29) et les axes (14, 15 et 30) sur lesquels elles sont montées sont logés à l'intérieur du support (13) formant un carter pratiquement étanche, dont les parois constituent les paliers (31 à 36) pour lesdits axes.

3. Machine selon la revendication 1 ou 2, caractérisée par le fait que l'axe de pivotement (14) du bras (6) est solidaire dudit bras et est guidé au moyen de roulements (57 et 58) dans les paliers (31 et 32) du support (13).

4. Machine selon la revendication 3, caractérisée par le fait que l'axe de pivotement (14) du bras (6) est réalisé en deux parties (51 et 52) dont l'une s'étend partiellement à l'intérieur de l'autre et que ces deux parties (51 et 52) sont liées entre elles au moyen de cannelures (53).

5. Machine selon la revendication 4, caractérisée par le fait qu'une des roues dentées (27) est fixée sur la partie (52) de l'axe de pivotement (14) qui s'étend partiellement à l'intérieur de l'autre partie (51) et que le bras porteur (6) est relié à cette autre partie (51).

6. Machine selon l'une quelconque des revendications précédentes, caractérisée par le fait que l'axe de pivotement (14) du bras (6) comporte un alésage intérieur (65) dans lequel passe une tige (66) solidaire du support (13).

7. Machine selon la revendication 1 ou 2, caractérisée par le fait que la roue dentée intermédiaire (29) est guidée sur l'axe de pivotement (30) au moyen d'aiguilles jointives (47).

## Claims

1. Machine for cutting blocks of silage in a horizontal silo, comprising a chassis (1) which is provided on its lower part with teeth (5) extending in a substantially horizontal plane and on its upper part with an arm (6) which extends a certain distance above the teeth (5) and has a cutting device (7) on its end furthest from the chassis (1), the said arm (6) being articulated on a support (13) by means of a pivot spindle (14) set in bearings (31, 32), the said support (13) being situated between the arm (6) and the chassis (1) and guided itself by means of bearings (33, 34) on an articulation spindle of the chassis (1) about which it can be rotated by driving means (16, 17, 18), the articulation spindle (15) having a toothed wheel (28) which meshes with an intermediate toothed wheel (29) which is mounted on a shaft (30) set in bearings (35, 36) of the support (13) and meshes with a toothed wheel (27) connected to the arm (6) in such a way as to make the arm (6) turn on its spindle (14) for pivoting with the support (13) in the opposite direction to that in which the said support (13) rotates about its spindle (15) for articulation with the chassis (1), characterised in that the guide bearings (31 and 32, 33 and 34, 35 and 36) of each spindle (14, 15 and 30) are placed on either side of the corresponding toothed wheel (27, 28 and 29) in such a way that in relation to the said toothed wheels one of the bearings is located on the same side as the arm (6) bearing the cutting device (7) and another on the same side as the chassis (1) of the machine.

2. Machine as claimed in claim 1, characterised in that the toothed wheels (27, 28 and 29) and the spindles (14, 15 and 30) on which they are mounted are set inside the support (13) forming a practically sealed casing, the walls of which constitute the bearings (31 to 36) for the said spindles.

3. Machine as claimed in claims 1 or 2, characterised in that the pivot spindle (14) of the arm (6) is integral with the said arm and is guided by means of roller bearings (57 and 58) in the bearings (31 and 32) of the support (13).

4. Machine as claimed in claim 3, characterised in that the pivot spindle (14) of the arm (6) is produced in two parts (51 and 52) of which one extends partially inside the other and these two parts (51 and 52) are connected to one another by means of grooves (53).

5. Machine as claimed in claim 4, characterised in that one of the toothed wheels (27) is fixed on the part (52) of the pivot spindle (14) which extends partially inside the other part (51), and the arm (6) is connected to this other part (51).

6. Machine as claimed in any one of the preceding claims, characterised in that the pivot spindle (14) of the arm (6) has an internal bore (65) through which a rod (66) which is integral with the support (13) passes.

7. Machine as claimed in claims 1 or 2, characterised in that the intermediate toothed wheel (29) is guided on the pivot spindle (30) by means of joint pins (47).

## Patentansprüche

1. Maschine zur Entnahme von Futterblöcken aus einem horizontalen Silo, mit einem Rahmen (1), an dessen Unterteil sich in einer im wesentlichen horizontalen Ebene erstreckende Gabelzinken (5) und an dessen Oberteil ein sich in gewissem Abstand oberhalb dieser Gabelzinken (5) erstreckender Tragarm (6) angeordnet ist, der an seinem vom Rahmen (1) entferntesten Ende eine Schneidvorrichtung (7) trägt, wobei der Tragarm (6) an einen Träger (13) durch eine in Lagern (31, 32) gelagerte Drehachse (14) angelenkt ist und dieser Träger (13) zwischen dem Tragarm (6) und dem Rahmen (1) angeordnet ist und selbst mittels der Lager (33, 34) um eine Anlenkachse (15) des Rahmens (1) geführt ist, um welche er mittels Mitnehmeorganen (16, 17, 18) in Drehung versetzt werden kann, und die Anlenkachse (15) ein Zahnrad (28) aufweist, welches mit einem auf einer in den Lagern (35, 36) des Trägers (13) gelagerten Achse (30) befestigten, zwischengeschalteten Zahnrad (29) in Eingriff steht, welches mit einem mit dem Tragarm (6) verbundenem Zahnrad (27) derart in Eingriff steht, dass der Tragarm (6) um seine Drehachse (14) mit dem Träger (13) in die der Drehrichtung des Trägers (13) um die Anlenkachse (15) am Rahmen (1) entgegengesetzte Richtung dreht, dadurch gekennzeichnet, dass die Führungslager (31 und 32, 33 und 34, 35 und 36) einer jeden Achse (14, 15 und 30) zu beiden Seiten des entsprechenden Zahnrades (27, 28 und 29) derart angeordnet sind, dass, bezogen auf die Zahnräder, eines der Lager an der Seite des die Schneidvorrichtung (7) tragenden Tragarms (6) und das andere an der Seite des Rahmens (1) der Maschine angeordnet ist.

2. Maschine nach Anspruch 1, dadurch gekennzeichnet, dass die Zahnräder (27, 28 und 29) und die Achsen (14, 15 und 30), auf welchen sie befestigt sind, im Innern des Trägers (13) gelagert sind, wodurch ein praktisch abgedichtetes Gehäuse gebildet ist, dessen Wände die Lager (31 bis 36) für die Achsen bilden.

3. Maschine nach Anspruch 1 oder 2, dadurch gekennzeichnet dass die Drehachse (14) des Tragarms (6) mit diesem formschlüssig verbunden ist und mittels Wälzlagern (57 und 58) in den Lagern (31 und 32) des Trägers (13) geführt ist.

4. Maschine nach Anspruch 3, dadurch gekennzeichnet, dass die Drehachse (14) des Trägers (6) aus zwei Teilen (51 und 52) besteht, dessen einer Teil sich im wesentlichen ins Innere des anderen erstreckt und dass die beiden Teile (51 und 52) mitsammen mittels Keilprofil (53) verbunden sind.

5. Maschine nach Anspruch 4, dadurch gekennzeichnet, dass eines der Zahnräder (27) am Teil (52) der Drehachse (14) der sich im wesentlichen ins Innere des anderen Teiles (51) erstreckt befestigt ist und dass der Tragarm (6) mit diesem anderen Teil (51) verbunden ist.

6. Maschine nach einem der vorhergehenden Ansprüche, dadurch gekennzeichnet, dass die Drehachse (14) des Tragarms (6) eine Innenbohrung (65) aufweist, in welcher eine mit dem Träger (13) formschlüssig verbundene Stange (66) verläuft.

7. Maschine nach Anspruch 1 oder 2, dadurch gekennzeichnet, dass das zwischengeschaltete Zahnrad (29) auf der Drehachse (30) durch ein Nadellager (47) geführt ist.

Fig:1

Fig: 2

Fig:3

Fig:4

EP 0 152 364 B1